# EUROPEAN PATENT APPLICATION

(11) **EP 2 631 818 A1**
(43) Date of publication of application: **28.08.2013**
(21) Application number: 12157002.2
(22) Date of filing: 24.02.2012
(51) Int. Cl.: G06F 17/30

(54) **Method and apparatus for displaying files by categories in a graphical user interface**

(71) Applicant: Research in Motion TAT AB, 21140 Malmö (SE); Research In Motion Limited, Waterloo, ON N2L 3W8 (CA)
(72) Inventor: Freyhult, Maria Christina Nathalie, 211 40 Malmö (SE); Kumar, Arun, Ontario N2L 3W8 (CA); Arbsjö, Jonas Ove, 211 40 Malmö (SE); Greisson, Erik Artur, 211 40 Malmö (SE); Leyon, Christofer Bengt Thure, 211 40 Malmö (SE); Chakirov, Martin, 211 40 Malmö (SE)
(74) Representative: Moore, Barry

(57) **Abstract**

A method and computing device are provided for retrieval of stored data files. The files are categorized into a categories. At least two of the categories are displayed on the device display, each within a respective discrete display area of the display. A graphical representations of data files belonging to a category are displayed in the area of the corresponding category.

## Description

### Technical Field

The present application relates generally to the operation of a computing device and particularly to accessing stored data within a communications device.

### Background

The use of communication devices, and in particular mobile communication devices, has extended to allow a user to receive voice calls and to send and receive electronic communications, which may include e-mail, short message service (SMS), multimedia messaging service (MMS) and video messaging service (VMS) messages, as well as other forms of messages. This messaging is typically provided in one or more modules which are executable within a processor of the device and which are individually accessible by a user on demand.

With the increase in processing capacity of these devices, more and more functionality is provided within the device and is available to a user. For example, it is known to provide a user with the capacity to store data content on their device. This content can be provided in a variety of different formats including images, sounds such as music or the like, movies. The content could be generated locally on the device using in built functionality such as cameras. The content could also or alternatively be generated off the device and then transferred to the device for local access by the user. With the increased capacity of devices, it is not uncommon for a user to have many hundreds of data files and with such volumes of data stored on the device, it is not always easy for a user to find content.

### Brief Description of the Drawings

In drawings which illustrate by way of example only embodiments of the present application,
Figure 1 is a block diagram of an embodiment of a computing device.
Figure 2 is a schematic diagram of an exemplary network topology for use with the computing device of Figure 1.
Figure 3 is a schematic diagram showing storage of specific data categories in accordance with the present teaching.
Figure 4 is a graphic showing a generated graphical user interface in accordance with the present teaching.
Figure 5A is a graphic showing a generated graphical user interface in accordance with the present teaching.
Figure 5B is a graphic showing the user interface of Figure 5A modified to display additional data files in accordance with the present teaching.
Figure 6 is a process flow showing a methodology in accordance with the present teaching.
Figure 7 is a process flow showing a methodology in accordance with the present teaching.
Figure 8 is a process flow showing a methodology in accordance with the present teaching.

### Detailed Description

The embodiments described herein provide a system, method and apparatus for improving user access to data as part of generation of a user interface display. In providing improved access to data the present teaching obviates a need to scroll through many different icons or data represenations to retrieve the content that they wish to access.

This is particularly advantageous when utilised in the context of devices which employ small screen sizes where there is a physical limit to the amount of content that can be concurrently displayed. While display screen sizes have increased, they are still relatively small compared to conventional computing displays. With a limited footprint there are difficulties in how to enable a user to access the information that is stored within the device. The amount of content that can be displayed on these small screens is limited. The representations of the data could be reduced- for example using thumbnail images or the like, but this reduces the quality of the data and makes the decision process for the user more difficult. The user could also be presented with a tile format of individual representations of the data content and then scroll through these tiles through a screen refresh process. However this makes it difficult for a user to recall where exactly they saw a particular data file. In accordance with the present teaching, the defining of categories that group individual data files that share common criteria allows for generation of a graphical user interface that provides a user with a contextual interface for accessing data.

By providing such a contextual interace it is possible in accordance with the present teaching to improve speed of access to particular data files. This can have a beneficial effect on the performance of the device. It will be appreciated that many of these devices are battery powered and the performance of the battery is critical. Any user interaction with the device has a corresponding effect on the battery consumption. A traditional requirement for a user to go through many interactions or click through operations with the device to find the data content that they wish to access has an effect on the battery and can reduce the time period between which a user needs to recharge their device. By improving the user interface accessing that data, the present teaching at least partially alleviates such a problem.

It will be appreciated that typically data files are stored and accessed through dedicated interfaces depedent on the form of that data. Content of different forms is stored and accessed through different modules or applications executable on the device. For example, images are stored in an image folder and music in a music folder. Movies which include both imagery and sound are stored in a movie folder. If a user needs to access specific types of content they need to switch between the dedicated modules for each of the data types to access a particular data type. As a result of the limited display footprint on the device, the switching between modules or applications typically effects a replacement of information from a displayed module with information from the new module. This can have an effect on a user accessing content that shares a common theme or criteria. In accordance with an exemplary arrangement of the present teaching a common interface can be provided to data of different types, the user being presented through that common interface with data that shares a common set of defined criteria.

In a first exemplary arrangement a method of generating a graphical user interface on a display of a computing device is provided. The method is particularly directed to providing user access to one or more individual data files that are stored within the computing device. It will be appreciated however that the present teaching should not be construed as being limited to data that is actually stored on the device which is used to generate the graphical user interface as the present teaching can be extended to a graphical user interface for providing a user with access to data irrespective of the storage location of that data. For example the device could be configured to allow a user to access data stored in one or more remote locations and by employing a methodology in accordance with the present teaching it is possible to provide a user with a display that allows a user to select and retrieve individual data files.

Each data file is associated with a graphical representation of the data file and the user accesses the data by selecting the specific graphical representation for that data file. The graphical representation may include actual images particular or relevant to the specific data file. It could also be a generic image representation with associated text based distinguishing elements.

For example, in the context of image data the graphical representation may be a reduced-dimension sized representation of the image data file itself. For example, the graphical representation that is displayed may be a thumbnail or other suitably reduced representation of the larger image- be that a stored camera image or other similar format image file. The image may be stored in a variety of formats. For example it is known to store images in a .bmp or .jpg format and these or other formats could be used within the context of the present teaching.

In the context of movie data, the graphic representation of the movie data file may include a still image of one of the scenes of the movie. It could include an identifier within the representation that identifies the data file as being a movie type data file. This could comprise for example a representation of a video recorder or a playback icon.

In the context of sound data, for example stored music files, the representation could comprise a graphic such as album art or identifiers specific to a particular artist.

In the context of calendar or email data, the graphical representation may include an identifier of the type of data- for example a calendar or email icon. This may be provided as an abstract identifier of the origin of the data file or may include individual identifiers so as to distinguish, for example one calendar event from another.

It will be appreciated that the nature of the graphical representation chosen is such as to allow a user to visually distinguish one displayed data file from another.

As discussed above with reference to the known art, in existing devices when a user attempts to access stored data files they typically have to initially access the application module for that data file type- be that a camera or a movie or a sound application. They are then presented within that module with a non-ordered or at most time-ordered sequential list of the individual data files which then can then access individually. The individual access of one of the data file through for example a click or in the context of a touch screen device a user touch on the icon, then generates a larger representation of the data file. The user then may scroll through that list. In contrast to this traditional approach, the present inventors have realized that it is possible to provide improved access to stored data by categorizing the data in accordance with one or more criteria, prior to, or concurrent with, the display of the data. By processing the data into one or more categories it is then possible to provide the user with subsets of the stored data files organized into categories to assist in the retrieval process. This categorization may not require a physical movement of the storage location of the data file but simply a virtual grouping such that actual selection of a particular data file results in an opening of the data file in its originally stored location.

In accordance with the present teaching a plurality of stored data files are processed into two or more categories of data with each category including a subset of the plurality of stored data files. As discussed above, within the context of the present teaching an individual data file may be categories in two or more different categories. The categories are desirably configured so as to contextually group data files using similar themes. For example one category may be those data files recently added to the device. Another category may be those data files recently viewed or accessed on the device. Another category may be those data files that are geographically tagged or identified as being relevant to a sensed location of the device. Another category may be those data files that are associated with time related data events such as for example calendar or scheduler events. This is particularly useful if a user wishes to access data associated with a particular meeting.

On determination that a user wishes to access data, the device is configured to generate a graphical user interface which includes two or more categories of the data files and individual graphical representations of specific data files within those two or more categories. The graphical representations of the specific data files may be ordered or ranked within the category. In this way a user may be provided in a single display with a plurality of graphical representations of data files categorized into two or more distinct categories. The user can directly access or retrieve the data files associated with the graphical representations from this display. If the desired data file is not displayed within the initial display, the user may then search within that category through for example an expansion of the display area associated with that category.

In this way the present teaching provides, within a display of the device, a number of different categories concurrently. These categories can be expanded independently of each other. The expansion of one category may result in an increase in the footprint of the display area occupied by that category. In such a scenario this increase will be at the expense of a reduction in the footprint occupied by a second category. In another arrangement the expansion of the category could be a simple replacement of the graphical representations within that category display area.

By concurrently providing a categorization of data and individual representations of data the present teaching provides a user with a direct link to relevant data but ALSO a window into a particular category so that the user can continue to search there . For example, in categories such as "recently added" and "recently viewed" the device may be configured to provide search options within both these categories within the same screen. The ranking or other organization of the data files within the individual categories is also beneficial in that a user is presented with the most likely content from these categories. In this way the present teaching overcomes many of the limitations associated with retrieving data within the context of the reduced dimension screens or displays that are available in mobile devices. By reducing the number of iterative steps that is required to provide a user with desired data, the performance of the device is also improved and the drain on a battery for the device is also reduced.

Accordingly in one exemplary arrangement, the present teaching provides a device configured to:
Categorize stored data files into a number of categories;

In response to an input to the device, display at least two of the categories on the display, each displayed category being displayed within a respective discrete display area of the display and, in each of the discrete display areas concurrently display graphical representations of data files for that category.

In one exemplary arrangement the device is configured to process a command, provided in response to the concurrent display of the graphical representations of the data files, to allow a user directly select one of the plurality of individual files identified by a graphical representation.

The direct selection may also provide a preferential display of the selected one of the plurality of individual files.

In one exemplary arrangement, where the graphical representation is a link to an executable file, the selection provides for an execution of the executable file. In this way a user can, for example, directly effect a playback of a stored movie or a music file from an initial display screen. In this way the input to the device may be configured so as to effect a launch of an application executable within the computing device and dedicated to the display of the files of the identified file type, the displaying within individual display areas of the display being provided as an initial display screen of the application. Within the context of the present teaching file types are intended to differentiate between files that comprise a particular content type, such as images, videos, text, spreadsheets, presentations, contacts (such as business cards or address book entries) or sounds/music. For example files that comprise images (whether they be formatted as JPEG, Bitmap (BMP), Tagged Image File Format (TIFF) or any other image format) would be files of one type because they have one type of content, that is, images. A file type includes data files having a similar form. Each of these examples (images, video, sound/music and text) would constitute different file types in the generic.

In one exemplary arrangement, the display within individual areas effects a segmentation of a display into distinct regions for each of the two or more categories. In such an arrangement the distinct regions may initially be provided having equal area.

In scenarios where a particular category includes more data files than may be concurrently displayed within the area for that category, the device may be configured to process commands to change the displayed graphical representations of the plurality of individual ones of the stored data files for that category. This command may be initiated in one exemplary arrangement by providing a graphical indication within the display area of the presence of additional individual ones of the stored data files so as to prompt a user command to change the display. The graphical indication may be co-located with the location within the display area of one of the already displayed graphical representations of one of the individual ones of the stored data filed.

This change of display may be effected in one arrangement by replacing one or more of the displayed individual ones of the stored data files with other data files within the same category. In another exemplary arrangement, this change may be effected by increasing the area occupied by that category in preference to the area occupied by a second category so as to display additional individual ones of the stored data files within the particular category. In this latter arrangement the device may expand the area occupied by the selected category in preference to other categories while retaining at least a portion of other category within the display of the user interface.

In the scenario where the change of display is effected by expanding the display area occupied by a specific category, the increase in available display area allows additional graphical representations of a plurality of individual ones of the stored data files for that category to be concurrently displayed within the user interface.

The device may be configured to iteratively change the displayed graphical representations based on sequential user initiated commands.

The categorization of the stored data files may provide for the categorization of a specific data file into two or more distinct categories. The categorization may be effected concurrently with the input response to the device.

In another, preferred exemplary arrangement, the categorization is done periodically such that on receipt of an input to the device, categories of the stored data are already available for display. One example of such an arrangement is whereby the sensing by the device of the addition of any new data files results in an update of the categorization process to include the new data files within identified categories.

It will be appreciated that within the present context, categorization provides a grouping or association of individual data files that share a common theme or identifier. In accordance with an exemplary embodiment of the present teaching, a category is defined by one or more criteria. Categories are distinguished from other categories by the criteria that define the categories. In selecting data files for inclusion within that category, the data files are interrogated or evaluated based on their relevance to the defined one or more criteria for that category. One way to evaluate this relevance is to use metadata. In accordance with one exemplary arrangement of the present teaching individual data files are interrogated so as to evaluate their relevance for defined criteria and then those data files that share a common defined criteria or set of criteria are defined as being within the same category.

One way of evaluating whether a particular data file meets the defined criteria so as to allow its inclusion in a particular category is to evaluate the metadata of that data file. It will be appreciated that metadata provides information about data file's content. For example, an image data file may include metadata that describes how large the picture is, the color depth, the image resolution, when the image was created, and other data. A text document data file metadata may contain information about how long the document is, who the author is, when the document was written, and a short summary of the document. Within the context of the present teaching, such metadata may be usefully employed. By evaluating whether the metadata includes information or identifiers that match a criteria or set of criteria that define a category, it is possible to evaluate the relevance of a particular category for a particular data file.

It will be appreciated that the same data file may have multiple defining criteria and that based on these criteria that the same data file may be logically grouped into two or more categories. Non-limiting examples of criteria include a date stamp, a geographical locator stamp or an author stamp. If a category is defined as "most recent" then all those data file that have a date stamp within a defined range will meet the criteria defined for that category. If a category is defined for recent documents by a particular author then any data file that is identifiable with the particular author and was created in a certain time range will meet the criteria for that category. It is possible within these two examples that the same data file could be identifiable within each of the two categories.

The categorization may be provide for a ranking of the stored data files so as allow for a preferential display of individual ones of the stored data files based on their relevance within a particular category.

The categories may include data files of the same type. In another exemplary arrangement the categories include data files of different types. In such an arrangement a displayed individual category may include graphical representations related to different data file formats.

The input to the device may be a search query. In such a configuration, the categorization may be effected based at least in part on an analysis of a user input search string.

The input to the device may be a user activation of an application within the device, the individual display areas of a user interface providing a launch screen for that application. In accordance with the present teaching multiple individual applications which are individually executable within the device may each include a common launch screen which provides for a user with contextual access to the data files of particular to that application.

As was discussed heretofore, the above may be particularly advantageous in the scenario of providing contextual or other intelligent display of data to a user wishing to retrieve or access individual ones of a plurality of already stored data files within a computing device. It may also be used in providing a user with an access or user interface to data stored in two or more locations, at least one of the locations being remote from the device. With this increase in the available data and its actual location relative to the device being used to access that data being less relevant, the provision of a contextual or intelligent display per the present teaching is particularly advantageous.

The example embodiments will be described and illustrated primarily in relation to computing devices such as communication devices that are adapted to communicate wirelessly various types of networks. It will be appreciated by those skilled in the art, however, that this description is not intended to limit the scope of the described embodiments to implementation on these particular systems or to wireless-enabled devices. For example, the embodiments described herein may be applied to any appropriate communication device or data processing device, whether or not it is adapted to communicate with another communication or data processing device over a fixed or wireless connection, whether portable or wirelessly enabled or not, whether provided with voice communication capabilities or not. The computing device can be adapted to process data and carry out operations on data in response to user commands for any number of purposes, including productivity and entertainment. Thus, the embodiments described herein may be implemented on computing devices adapted for content browsing, communication or messaging, including without limitation cellular phones, smartphones, wireless organizers, personal digital assistants, desktop computers, terminals, laptops, tablets, handheld wireless communication devices, notebook computers, ebook readers, entertainment devices such as MP3 or video players, and the like. Unless expressly stated, a computing or communication device may include any such device.

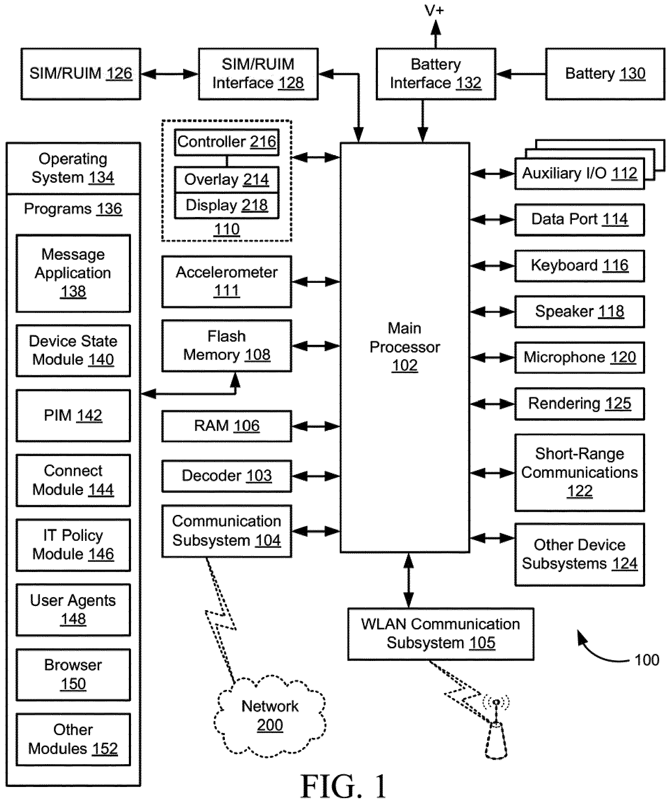

Figure 1 is a block diagram of an exemplary embodiment of a computing device 100. The computing device 100 includes a number of components such as a main processor 102 that controls the overall operation of the computing device 100. Communication functions, including data and voice communications, are performed through a communication subsystem 104. Data received by the computing device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the computing device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the computing device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems.

The mobile device 100 may be provided with additional communication subsystems, such as the wireless LAN (WLAN) communication subsystem 105 also shown in Figure 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. As noted above, voice communication capabilities and connectivity to voice-centric networks is not mandatory for the operation of the computing device 100 with the within embodiments. Thus, the wireless communication subsystem 104 may be omitted. If so, optionally a dongle or other peripheral device (not shown) may be connected to the device 100 to provide the device 100 with access to the wireless network 200.

The main processor 102 also interacts with additional subsystems such as a Random Access Memory (RAM) 106, a flash memory 108, a display 110, other data and memory access interfaces such as an auxiliary input/output (I/O) subsystem 112 or a data port 114, a keyboard 116, a speaker 118, a microphone 120, the short-range communications 122 and other device subsystems 124. Each interaction causes a power event that has an effect on the battery consumption of the device. Certain subsystems are more intensive power consumers than other subsystems.

The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display assembly 110 in response to a determination of the current orientation of the device 100.

In some embodiments, the user device 100 may comprise a touchscreen-based device, in which the display interface 110 is a touchscreen interface that provides both a display for communicating information and presenting graphical user interfaces, as well as an input subsystem for detecting user input that may be converted to instructions for execution by the device 100. Indeed the present teaching is particularly suited for such touchscreen display interfaces as the screens of these devices provide increased area or footprint relative to other computing device which is particularly suitable for the concurrent display of different categories per the present teaching. It will be appreciated however that the present teaching is not to be construed as being limited to only touchscreen devices as the segmentation of a display into distinct regions for the display of specific categories of data files has application and benefit for non-touch screen devices.

The touchscreen display interface 110 may be the principal user interface provided on the device 100, although in some embodiments, additional buttons, variously shown in the figures or a trackpad, or other input means may be provided. In one embodiment, a transmissive TFT LCD screen 218 is overlaid with a clear touch sensor assembly 214 that supports single and multi-touch actions such as tap, double-tap, tap and hold, tap and drag, scroll, press, flick, and pinch. The touchscreen display interface 110 detects these single and multi-touch actions, for example through the generation of a signal or signals in response to a touch, which may then be processed by the processor 102 or by an additional processor or processors in the device 100 to determine the location of the touch action, whether defined by horizontal and vertical screen position data or other position data. Touch location data may include an area of contact or a single point of contact, such as a point at or near a center of the area of contact. The touchscreen display interface 110 may be provided with separate horizontal and vertical sensors or detectors to assist in identifying the location of a touch. A signal is provided to the controller 216, shown in Figure 1, in response to detection of a touch. The controller 216 and/or the processor 102 may detect a touch by any suitable contact member on the touch-sensitive display 110. It will be appreciated that this touch interface is exemplary of the type of user interaction that may be provided to a user to allow activation of specific functions on the computing device. Other interface means may include those that make use of voice commands or other non-tactile interaction.

Some of the subsystems of the computing device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file which is accessed from one or more identifiable data stores within the device is to be viewed on the display 110, the rendering circuit 125 analyzes and processes the data file for visualization on the display 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The computing device 100 can send and receive communication signals over the wireless network 200 after required network registration or activation procedures have been completed. Network access is associated with a subscriber or user of the computing device 100. To identify a subscriber, the computing device 100 requires a SIM/RUIM/UICC card 126 (i.e. Subscriber Identity Module, Removable User Identity Module, Universal Integrated Circuit Card, or the like) or another suitable identity module to be inserted into a SIM/RUIM/UICC interface 128 in order to communicate with a network. The SIM/RUIM/UICC card 126 is one type of a conventional "smart card" that can be used to identify a subscriber of the computing device 100 and to personalize the computing device 100, among other things. Without the SIM/RUIM/UICC card 126, the computing device 100 is not fully operational for communication with the wireless network 200. By inserting the SIM/RUIM/UICC card 126 into the SIM/RUIM/UICC interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM/UICC card 126 includes a processor and memory for storing information. Once the SIM/RUIM/UICC card 126 is inserted into the SIM/RUIM/UICC interface 128, it is coupled to the main processor 102. In order to identify the subscriber, the SIM/RUIM/UICC card 126 can include some user parameters such as an International Mobile Subscriber Identity (IMSI). An advantage of using the SIM/RUIM/UICC card 126 is that a subscriber is not necessarily bound by any single physical mobile device. The SIM/RUIM/UICC card 126 can store additional subscriber information for a mobile device as well, including datebook (or calendar) information and recent call information. Alternatively, user identification information can also be programmed into the flash memory 108.

The computing device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the computing device 100. Although current technology makes use of a battery, future technologies such as micro fuel cells can provide the power to the computing device 100.

The computing device 100 also includes an operating system 134 and software components 136 to 152 which are described in more detail below. The operating system 134 and the software components 136 to 152 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 138 to 152, such as specific device applications, or parts thereof, can be temporarily loaded into a volatile store such as the RAM 106. Select other modules 152 may also be included, such as those described herein. Other software components can also be included, as is well known to those skilled in the art.

The subset of software applications 136 that control basic device operations, including data and voice communication applications, will normally be installed on the computing device 100 during its manufacture. Other software applications include a message application 138 that can be any suitable software program that allows a user of the computing device 100 to send and receive electronic messages. Various alternatives exist for the message application 138 as is well known to those skilled in the art. Messages that have been sent or received by the user are typically stored in the flash memory 108 of the computing device 100 or some other suitable storage element in the computing device 100. In at least some embodiments, some of the sent and received messages can be stored remotely from the device 100 such as in a data store of an associated host system with which the computing device 100 communicates.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the computing device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200.

PIM data items can be seamlessly integrated, synchronized, and updated via the wireless network 200 with the mobile device subscriber's corresponding data items stored and/or associated with a host computer system. This functionality creates a mirrored host computer on the computing device 100 with respect to such items. This can be particularly advantageous when the host computer system is the mobile device subscriber's office computer system. Some or all of the data items stored at the computing device 100 may be indexed for searching on the device 100 either through a corresponding application, such as the PIM 142, or another suitable module. In addition, the items may be searchable using a unified search process implemented in the device operating system 134. For example, application data items can be encapsulated in a searchable entity class and registered with a unified search engine on the device 100 that executes searches against all registered data repositories on the device based on received queries. The search engine can also be configured to invoke a search process of external resources, such as Internet search engines or remote databases. In the context of entering data directly onto the computing device through the computing device, it will be appreciated and understood however that the functionality available to user of the computing device is typically less than that available to the user of the host computer system.

The computing device 100 also includes a connect module 144, and an information technology (IT) policy module 146. The connect module 144 implements the communication protocols that are required for the computing device 100 to communicate with the wireless infrastructure and any host system, such as an enterprise system, with which the computing device 100 is authorized to interface.

The connect module 144 includes a set of Application Programming Interfaces (APIs) that can be integrated with the computing device 100 to allow the computing device 100 to use any number of services associated with the enterprise system or with other systems accessible over the network 200. The connect module 144 allows the computing device 100 to establish an end-to-end secure, authenticated communication pipe with the host system. A subset of applications for which access is provided by the connect module 144 can be used to pass IT policy commands from the host system to the computing device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the computing device 100, such as browsers 150, other user agents 148, and other modules 152. These software applications can be third party applications, which are added after the manufacture of the computing device 100. Other examples of third party applications include games, calculators, utilities, etc.

The additional applications can be loaded onto the computing device 100 through at least one of the wireless network 200, the auxiliary I/O subsystem 112, the data port 114, the short-range communications subsystem 122, or any other suitable device subsystem 124. This flexibility in application installation increases the functionality of the computing device 100 and can provide enhanced on-device functions, communication-related functions, or both. For example, secure communication applications can enable electronic commerce functions and other such financial transactions to be performed using the computing device 100.

The data port 114 enables a subscriber to set preferences through an external device or software application and extends the capabilities of the computing device 100 by providing for information or software downloads to the computing device 100 other than through a wireless communication network. The alternate download path can, for example, be used to load an encryption key onto the computing device 100 through a direct and thus reliable and trusted connection to provide secure device communication. The data port 114 can be any suitable port that enables data communication between the computing device 100 and another computing device. The data port 114 can be a serial or a parallel port. In some instances, the data port 114 can be a USB port that includes data lines for data transfer and a supply line that can provide a charging current to charge the battery 130 of the computing device 100.

The short-range communications subsystem 122 provides for communication between the computing device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the computing device 100 is substantially similar, except that the received signals are output to the speaker 118, and signals for transmission are generated by the microphone 120. Alternative voice or audio I/O subsystems, such as a voice message recording subsystem, can also be implemented on the computing device 100. Although voice or audio signal output is accomplished primarily through the speaker 118, the display 110 can also be used to provide additional information such as the identity of a calling party, duration of a voice call, or other voice call related information.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. Signals received by an antenna through the wireless network 200 are input to the receiver, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP. In a similar manner, signals to be transmitted are processed, including modulation and encoding, by the DSP, then input to the transmitter for digital-to-analog (D/A) conversion, frequency up conversion, filtering, amplification and transmission over the wireless network 200 via an antenna. The DSP not only processes communication signals, but also provides for receiver and transmitter control, including control of gains applied to communication signals in the receiver and the transmitter. When the computing device 100 is fully operational, the transmitter is typically keyed or turned on only when it is transmitting to the wireless network 200 and is otherwise turned off to conserve resources. Similarly, the receiver is periodically turned off to conserve power until it is needed to receive signals or information (if at all) during designated time periods. Other communication subsystems, such as the WLAN communication subsystem 105 or a WPAN communication subsystem, not shown, may be provided with similar components as those described above configured for communication over the appropriate frequencies and using the appropriate protocols. The particular design of the communication subsystem 104, 105, or other communication subsystem is dependent upon the communication network 200 with which the computing device 100 is intended to operate. Thus, it should be understood that the foregoing description serves only as one example.

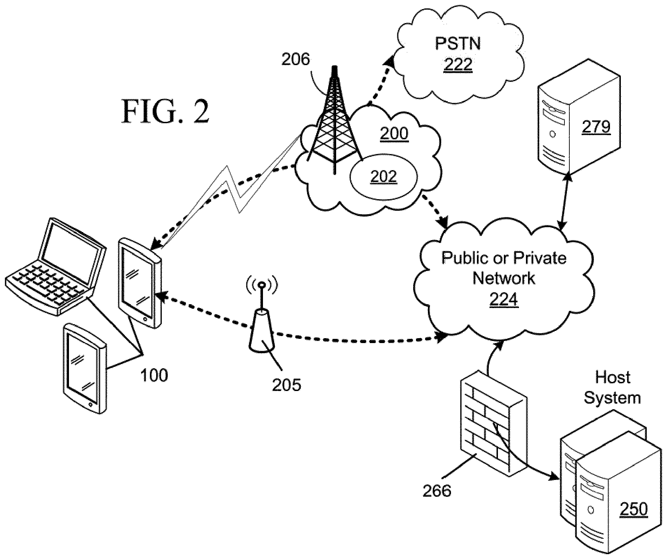

Figure 2 illustrates a possible network topology for the computing device 100, including paths for data and voice traffic, and including a host or enterprise system 250. The host or enterprise system 250 will typically be a corporate enterprise or other local area network (LAN), but can also be a home office computer or some other private or quasi-private system, for example a subscription-based Internet service. Typically, a number of communication devices 100 can communicate wirelessly with the host or enterprise system 250 through one or more nodes 202 of the wireless network 200.

The host or enterprise system 250 comprises a number of network components, not shown, connected to each other by a network. Within the system 250, for example, user (including administrator) computers may be situated on a LAN connection, and one or more of these desktop computers can be provided with connection facilities for loading information (e.g. PIM data, private symmetric encryption keys to facilitate secure communications) from the user computer to the computing device 100, and can be particularly useful for bulk information updates often performed in initializing the computing device 100 for use. To facilitate the operation of the computing device 100 and the wireless communication of messages and message-related data between the computing device 100 and components of the host system 250, a number of wireless communication support components are provided within the system 250 (not shown). In some implementations, the wireless communication support components can include one or more data stores, a message management server, a mobile data server, a web server, such as Hypertext Transfer Protocol (HTTP) server, a contact server, and a device manager module including an information technology policy server and editor. HTTP servers can also be located outside the host or enterprise system, as indicated by the HTTP server 279 attached to the network 224. The mobile data server can also connect to the Internet or other public network through an enterprise HTTP server or other suitable web server such as a File Transfer Protocol (FTP) server, to retrieve webpages and other data. Requests for webpages are typically routed through mobile data server and then to the enterprise HTTP server, through suitable firewalls and other protective mechanisms. The web server then retrieves the webpage over the Internet, and returns it to mobile data server. The mobile data server is typically provided, or associated, with an encoder that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the computing device 100 via the shared network infrastructure 224 and the wireless network 200. Those skilled in the art know how to implement these various components. Other components can also be included as is well known to those skilled in the art.

The computing device 100's access to IP networks and to a public switched telephone network (PSTN), if applicable, can be provided through the wireless network 200, which comprises one or more nodes 202 configured for communication in accordance with a suitable mobile telephony standard. In turn, the wireless network 200 provides the computing device 100 with connectivity to the Internet or other public wide area network 224, and thence to the host or enterprise system 250. At the same time, if the computing device 100 is a multiple-mode device, it may also communicate with the host or enterprise system 250 over an enterprise LAN or WLAN, represented by the access point 205. It will be appreciated by those skilled in the art, however, that access to the host system 250 need not be limited to access via the enterprise network (whether wireless or not). Instead, the computing device 100 may access the host or enterprise system 250 over another network, such as the wide area IP network 224, via different access means, such as an access point located at the communication device user's home, or at a public or private Wi-Fi hotspot.

In this exemplary embodiment, the computing device 100 communicates with the host or enterprise system 250 through node 202 of the wireless network 200 and a shared network infrastructure 224 such as a service provider network or the public Internet. Access to the host or enterprise system can be provided through one or more routers (not shown), and computing devices of the host or enterprise system 250 can operate from behind a firewall or proxy server 266. A proxy server provides a secure node and a wireless internet gateway for the host or enterprise system 250. The proxy server intelligently routes data to the correct destination server within the host or enterprise system 250.

For some wireless networks 200 or LANs 205, the computing device 100 may be registered or activated with the respective network. A process for identifying a subscriber to a cellular network using a SIM or other identifier card 126 is described above. Other methods of registering or identifying the computing device 100 to various networks will be known to those of ordinary skill in the art. However, registration or activation may not be required for all wireless networks 200, LANs or WLANs, as some networks may allow access without prior registration or activation. The computing device 100 may also be provisioned or configured to access one or more networks. Methods of provisioning services on a computing device 100 will be generally known to those skilled in the art, but as a non-limiting example, a request for registration may be sent from the computing device 100 to a registration server of a service (not shown). If the request is approved, the registration server may transmit to the computing device 100 a service book or similar data item containing data and instructions to enable the computing device 100 to provision the service. The service book, when received at the computing device 100, may be self-executing, and permits the user to enter account information relevant to the associated service. This information is then transmitted from the computing device 100 to a provisioning server of the service provider (not shown), which then creates a service account associated with the computing device 100. Provisioning may also be carried out in compliance with the OMA DM (Open Mobile Alliance Device Management) specification version 1.2 or its predecessor or successor versions, published by the Open Mobile Alliance Ltd.

As was discussed above with the increase in processing capacity of these devices, more and more functionality is provided within the device and is available to a user. For example, it is known to provide a user with the capacity to store data content on their device. This content can be provided in a variety of different formats including images, sounds such as music or the like, movies. The content could be generated locally on the device using in built functionality such as cameras. The content could also or alternatively be generated off the device and then transferred to the device for local access by the user. With the increased capacity of devices, it is not uncommon for a user to have many hundreds of data files. The present teaching is particularly directed to providing a user of computing devices with access to data files which may in one exemplary arrangement being physically stored on the actual device.

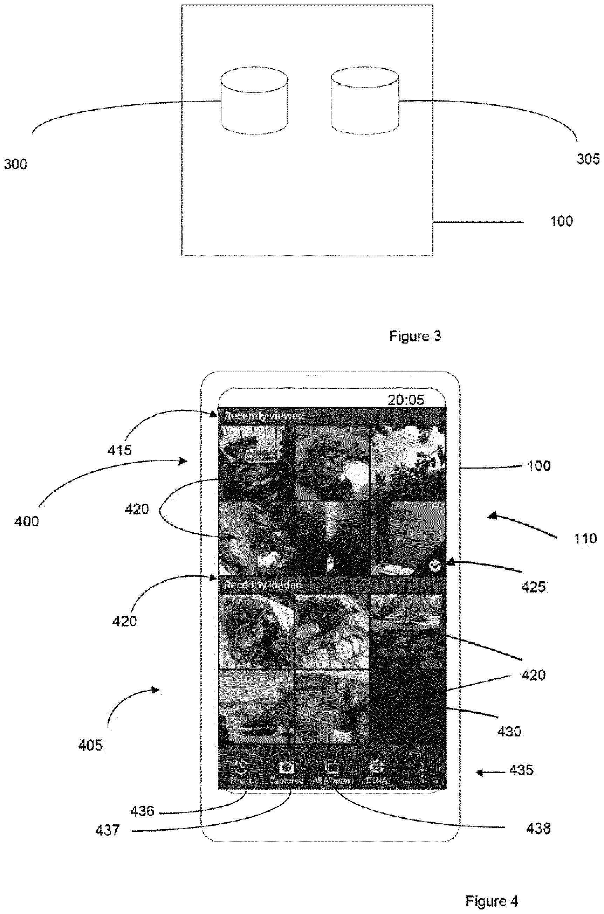

In accordance with the present teaching, structure is provided to the organisation of these data files in that they are categorised in accordance with one or more parameters, criteria or common identifiers. Figure 3 shows an example, in schematic form, how the present teaching provides for the organisation of a plurality of individual data files into first 300 and second 305 data structures within a data store of the device 100. Each of these first and second data structures are representative of different categories- using the example of Figure 4, they could be for example "Recently Viewed" and "Recently Loaded". It will be appreciated that while the Figure 3 represents the individual categories as distinct data stores that this is not a requirement of the present teaching. Data architectures that may be employed within the context of the present teaching may allow for the concurrent storage of a plurality of data files within a common structure. There are many ways to process such a common structure to distinguish between individual data files or groups of those data files which share a common theme or category. For example, one or more fields or flags may be defined and then associated with a subset to allow a subsequent identification and display of those that are commonly grouped. For this reason the present teaching should not be construed as being limited to the architecture shown in Figure 3. Furthermore where Figure 3 shows the data structures 300 and 305 as being co-located on the same device, it is possible within an exemplary arrangement of the present teaching for one or more of the data files that have been categorized or which are available for categorization to be located off device. In this way the device may include a mapping or other data pointer which will, when activated, effect a retrieval and display of the data file from its original location within the display of the computing device within which the graphical user interface is provided.

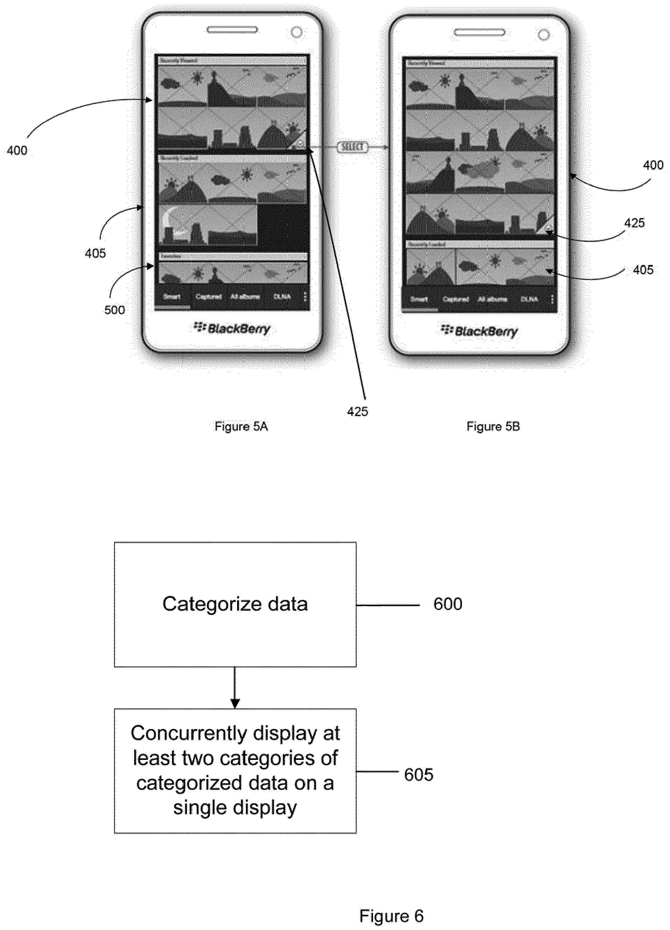

As shown in Figure 4 and 5, the present teaching makes use of the categorisation of data files to improve user access to those data files. Figures 4 and 5 show examples of a user interface for a tablet computing device or a smartphone computing device 100 comprising a touchscreen display 110. While the footprint of the display 110 occupies a substantial proportion of the overall footprint of the device 100, it is still of a reduced area as compared to conventional computing displays. As is common in other known touchscreen devices it will be appreciated that data that is intended to be displayed may be rendered visible in the display 110 in response to user events representing features such as scrolling (which causes the view of the displayed image to pan in a given direction), or by zooming out (which reduces the size of the view displayed on the display 110). It will be understood that by zooming out the data is displayed at a smaller resolution with the result that more data can be displayed within a given area of the display.

Figure 4 shows an example of an implementation of the present teaching in the form of an interface to an image application that is executable within a computing device. Such applications are known to provide a user with access to stored images. In the context of the present teaching and as is evident from the example of Figure 4, the present teaching provides for a segmentation of an overall display 110 of a user interface into distinct areas or regions which represent individual display areas 400, 405 of the overall display 110. In this example, two categories are shown but it will be appreciated that this is not intended to limit the present teaching to the provision of just two categories. In this example each of the two areas are identified by a title bar 415, 420 which details the nature of the category being displayed within this display area- "Recently Viewed" and "Recently Loaded" respectively. This interface can be considered a "smart interface" as it contextually presents the user with sets of individual data files that have been grouped in accordance with defined criteria-the examples being those data files that were meet a date stamp of when they were viewed ("Recently viewed") or retrieved ("Recent loaded").

It will be understood that the computation or processing of whether a particular data file meets particular criteria or criterion may require the storage of usage logs, metadata or the like. This may then be interrogated to evaluate which subset of files of a master data set of all data files are suitable for display or inclusion within the particular categories on the user interface.

In this way a categorization of stored data files into at least two categories may be effected by providing a first category wherein the data files are organized in accordance with a first criterion and at least a second category wherein the data files are organized in accordance with a second criterion distinct from the first criterion. By having multiple criterion such that each of the first and second categories comprise at least one data file it is possible to then display the categorized data files in accordance with their respective categories. The first and second criterion may share at least one common identifier, for example an identifier linked to date. In this way it will not be unexpected for a first data file can be in each of the first and second categories. Using the example of the "Recently Viewed" and "Recently Loaded" categories of Figure 4, it will be appreciated that if the criterion for each of these two categories include presence of an identifier for date within a prescribed period it is possible that a recently loaded data file may also have been recently viewed and therefore may turn up in each of the two display segments.

The present teaching may provide for a ranking of individual data files in accordance with their relevance to specific criterion. In this way, a first display area may then display graphical representations of high ranking data files in accordance with the first criterion, and a discrete second display area display graphical representations of high ranking data files in accordance with the second criterion. It will be understood that ranking could be applied to some or all of the categories such that certain categories will not include ranked data files whereas others will.

The user interface also, in this exemplary arrangement, provides a command bar 435 located separately to each of the two display areas 300, 405 but accessible from the same initial display. The command bar 435 includes one or more individual command icons 436, 436, 438 which on activation by a user will change the display presented on the graphical user interface. In the example of Figure 4, the view presented is a "smart interface" which has categorised and grouped data files that share common criteria. If the user does not identify the particular data file that they wish to retrieve they can toggle from this initial display to one of "captured" or "albums" to provide them with alternative interfaces to the data files that are available for retrieval.

In each of the display areas for each of the two or more categories the device is configured to concurrently display graphical representations 425 of a plurality of individual ones of the stored data files for that category.

In this example of a touch screen interface, the device is responsive to a user touching one of the displayed graphical representations to process a command to allow a user directly select one of the plurality of individual files for more detailed viewing. In this way the present teaching provides a concurrent review and access display for a user wishing to retrieve data. This direct selection provides a user with the capacity to preferentially display the selected one of the plurality of individual files relative to the others within that category.

On selection of a particular graphical user representation, the data file associated with that representation is preferentially displayed within the display area. This may be effected by increasing the display dimensions of that data file- in the context of Figure 4, an image file. The user may then use that data file as a starting point in a scroll process so as to access neighboring data files. In the context of images this is analogous to a known slideshow. The data files that are presented as neighboring may be those that are already grouped in the initial category.

In another arrangement, the user may have the capacity to change the scroll location so as to vary which data files may be accessed through a scroll process after retrieval of a first data filed from the smart interface display. For example, a user may recall that the barbecue scene of Figure 4 in the top left hand side of the display was taken at the same time as pictures of a party. The user wishes to access the pictures of the party but cannot remember where they are stored. The user selects the barbecue picture and then through providing a command such as "use original file location" is linked to all data files that were stored at that same time. These may not have been accessed recently and therefore would not meet the criteria that defines the "recently viewed" category and would not have been visible. However, as the categorization has provided contextual information, the user can then use that interface to directly access the original file location without having to remember where that is. The subsequent scrolling will present the user with those images that were taken at the same time. It will be appreciated that this example of images is exemplary and this link through to different file locations from a single interface could be used in the context of any file format or file type.

In the example of Figure 4 each of the display areas 400, 405 are initially generated having the same area. Each area is configured in this example to accommodate and concurrently display six individual graphical representations. In the example of Figure 4, the number of individual data files within the first category 415 is greater than six but as the area available for displaying the graphical representations is restricted to showing six at a time, the device is configured to process commands to change the displayed graphical representations of the plurality of individual ones of the stored data files for that category. This command may be initiated in this example by providing a graphical indication 425 within the display area 400 of the presence of additional individual ones of the stored data files so as to prompt a user command to change the display. The graphical indication 425 is shown in this example as an arrow which is superimposed over a portion of one of the already displayed graphical representations, in this case the bottom right hand side representation.

In the second category, the number of graphical representations is less than the available six with the result that a blank tile 430 is left available.

Where there are more data files available for display than is possible using the display area- per the example of the first category of Figure 4, it is possible to replace one or more of the displayed individual ones of the stored data files with other data files within the same category. In another example as shown in Figure 5, this change may be effected by increasing the area occupied by that category in preference to the area occupied by a second category so as to display additional individual ones of the stored data files within the particular category. In Figure 5A, a user is prompted by the presence of the graphical indicator 425 within the display area of the first category that there are additional graphical representations available for review. The initiation of a command caused by the user selecting that graphical indicator- which also serves as a command prompt- causes, as is shown in Figure 5B, the device to expand the area occupied by the selected category 400 in preference to other categories. As is shown in Figure 5B, on expansion of the available area for the first category 400, there are now 12 viewable graphical representations. This increase in area for the first category results in less area being provided for other categories. In this example there are three initial categories shown in the representation of Figure 5A, whereas in Figure 5B one of the three- the favorites category 500 is no longer visible but at least a portion of one of the other categories, in this case the Recently Loaded category 405 is retained within the display of the user interface.

It will be appreciated that in this arrangement whereby a change of display is effected by expanding the display area occupied by a specific category, the increase in available display area allows additional graphical representations of a plurality of individual ones of the stored data files for that category to be concurrently displayed within the user interface. The device may be configured to iteratively change the displayed graphical representations based on sequential user initiated commands. The possibility of showing additional graphical images is shown by the continued presence of a graphical indicator 425 in the view of Figure 5B.

In these examples the expand indicator 425 is provided on the last item of the category. As was clear from Figure 5, when this icon is selected, the category expands to show the next number of items. The expansion is to the bottom which pushes other categories down the page and if there are more items in the category that are available for viewing, the expand icon will continue to show. Certain implementations may restrict the number of expansions that may be conducted. For example, one implementation may restrict the expansion to a maximum of 4 times from the original set showing a maximum of 30 thumbnails- based on their being 6 thumbnails in each view. If a user reaches the end of the displayed graphical representations the system may be configured to provide a link to one or more other folders or interfaces to allow a user to extend the review process. In one example, the system may be configured to analyse the actual file locations of each of the data files that make up the displayed category and then present the user with a link to a file location that statistically represents a potential further search location. This could be based, for example, on the most common file location for the data files within this category. The system could also or alternatively be configured to prompt the user with access to a search interface.

As is evident from the above and as shown in Figure 6, the present teaching provides for a categorization of stored data (Step 600) and the concurrent display within a single display of at least two of those categories (Step 605). While shown in Figure 6 as being done in a sequential fashion, the categorization may be effected concurrently with the input response to the device requesting access to data files. In another, exemplary, arrangement the categorization is done periodically such that on receipt of an input to the device, categories of the stored data are already available for display. To preserve battery resources such categorization, which requires processing activity, could be restricted to times when the device is being recharged or otherwise coupled to another power source.

Within the context of the present teaching the device may be configured to allow a user to define categories or modify existing categories. In this way a user may select criteria that represent to the user a useful common access to data files. The user may then effect a creation of a particular category and the population of that category with specific data files that meet the criteria defined. The user may also be provided with the capacity to modify existing categories or change the order in which categories are displayed. In the event that a category has no relevant data file to display the system may be configured to omit a display of that category or provide another category or prompt the user to select an alternative category.

It will be appreciated that the methodology adopted by the present teaching improves the presentation of relevant data to a user and therefore reduces the number of steps required by a user to access specific data files. To further improve this, the categorization may be provided for a ranking of the stored data files so as allow for a preferential display of individual ones of the stored data files based on their relevance within a particular category. In the examples of Figures 4 and 5, the most relevant data file could be shown in the top left hand side of each category display area with those successively less relevant being listed from left to right and top to bottom such that the least relevant is shown on the bottom right hand side of each category display area.

In the examples shown heretofore the categories include data files of the same type-in this exemplary arrangement they are all image files. In another exemplary arrangement the categories include data files of different types. In such an arrangement a displayed individual category may include graphical representations related to different data file formats. For example if the category was recently loaded, the device may be configured to initially provide the six most recently loaded data files within the first display area, irrespective of their file type.

It will be appreciated that where the graphical representation is a link to an executable file, the selection provides for an execution of the executable file. In this way a user can, for example, directly effect a playback of a stored movie or a music file from an initial display screen.

It will be appreciated that the categorization provides a user with contextual information regarding retrieved data files. The device may be provided with one or more pre-loaded categories. In another configuration the user may be provided with an interface that allows them to modify category criteria or to create new criteria. Where a plurality of categories is defined, the user may also be enabled to rank the ordering of displayed categories or vary which of the categories are displayed for different data types.

It will be appreciated that a variety of different mechanisms may be provided to collate related data files. For example database entries of timestamps, of viewed items, counters for most viewed etc may be used to select content. Where the population of a category is based on geographical data, the device may be configured to actively interface with one or more secondary functions of the device such as GPS or other location identifiers so as to provide for example "nearest" and "favorite" categories which could be used to show content closest to a current location.

In the examples discussed heretofore, the categorization and display of stored data has been with reference to a so called "smart view" or "smart interface" to stored data. In such situations where the user is likely to repeatedly access data using common stored categorizations with the input to the device being a user activation of an application within the device, the individual display areas of a user interface providing a launch screen for that application.

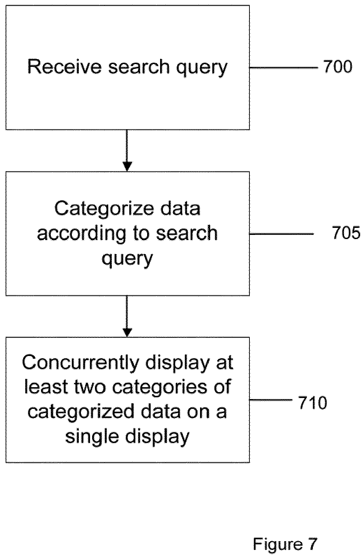

In another example, such as shown in Figure 7, the input to the device may be a search query (Step 700). In such a configuration, the categorization may be effected based at least in part on an analysis of a user input search string (Step 705). The displayed categories are then based, at least in part, on the search string.

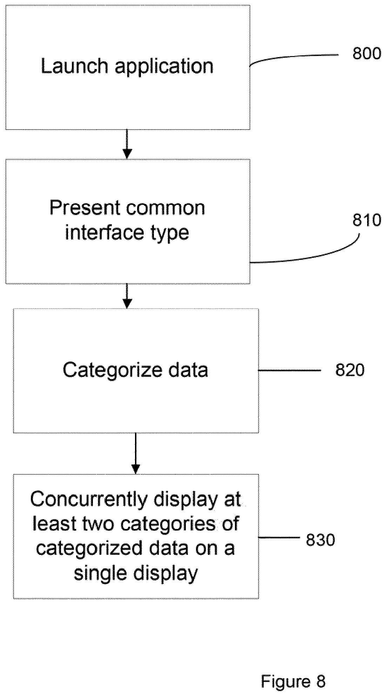

As has been described heretofore the present teaching is particularly advantageous in providing a contextual or intelligent user interface to a user wishing to access and retrieve one or more data files. In the examples of Figures 4 and 5, the user is presented with a user interface to a specific type of data file, that of an image file. It will be understood that traditionally within computing devices, computer applications or programs are provided that are dedicated to the access and retrieval of a specific type of data file. For example an image application provides access to image files, a movie application provides access to movies, an email application provides access to email etc.. In one example provided in accordance with the present teaching and as shown in Figure 8, the identified input to the device which effects generation of a segmented display showing two or more categories each category comprising data files selected according to a predetermined set of criteria, is an input which provides for a launching of a specific application. In such an arrangement, where a user launches one or more of for example an image application, a movie application, an email application etc., (Step 800) the user is presented with a common user interface type as the initial interface to that application (Step 810). The nature of the data files displayed in each of the applications may differ in accordance with the nature of the application being executed. However, within that specific data file type, a system and method in accordance with the present teaching will further categorize or have already categorized the data files according to one or more determined criteria that are defined for specific categories (Step 820). On determination that an individual data file comprises the criteria identified for a category, that individual data file is marked as being part of the category and will then be available for display as part of the segmented display. Its display location may depend on its ranking within the overall category, i.e. its relevance to the criteria for that category. The system then provides for a display of the two or more categories, each comprising graphical representations of individual data files that make up those two or more categories (Step 830).

The computing device 100 may receive user input by means of one or more user input systems, such as a user input device or interface, including without limitation the keyboard 116, display 110 where the display is comprised in a touchscreen interface (referred to herein as a touchscreen display 110), microphone 120, trackball, buttons, trackpad, scroll wheel, optical joystick, rocker switch, and the like. Advantageously, the computing device 100 is provided with a touchscreen display 110. Several of these user input devices may be external to the computing device 100 itself; for example, a pointing device such as a mouse, trackball, tablet or touchpad may be provided as a peripheral component. In the case of a mobile device such as a smartphone or tablet computer, user input mechanisms are advantageously incorporated into the chassis of the computing device 100 itself for improved portability and mobility. For example, in a touchscreen computing device 100 such as a tablet or smartphone, the device 100 is provided not only with a touchscreen display 110, which may provide the main user input mechanism and permit alphanumeric data entry through display of an interactive virtual keyboard on the display 110, but also with one or more buttons, and/or an optical joystick or trackpad. These various user input devices and interfaces may be actuated by the user (for example, through the application of touch, pressure, and or directional movement) to control the operation of the computing device, for example to navigate through graphical user interfaces, menu structures, and the like, to select and initiate application or operating system commands for execution, to input data for processing or transmission by the computing device, or to change settings on the computing device.

The embodiments herein have been described and illustrated primarily in relation to the access and retrieval of data files being images, movies or music but it will be appreciated that this categorisation and display of stored data may be extended to other data types such as calendar events, address books, tasks and the like. The present teaching provides improved access to stored data files within a categorisation structure.

As described above when displayed on a computing device 100, not all of the content that may be accessed through the device may be currently visible on the display area of the graphical user interface. To provide a user with access to stored data files, it is necessary to first provide the user with knowledge of the existence of those data files. The present teaching provides this knowledge through visual display that includes both categorisation information and also graphical representations of the data files in a form that identifies the data file to a user. To initiate the display the present teaching makes use of a user input mechanism that receives user input through user contact-primarily, manual manipulation-notionally these mechanisms may be considered as input mechanisms for detecting inputs either for cursor-based control or for touch-based control of the computing device 100. Cursor-based control, typically associated with pointing devices such as mice, permits the user to control the positioning of a cursor or other sprite displayed in a graphical user interface rendered on the display 110. When the cursor is positioned ("hovering") over a particular graphical user interface element, the input mechanism may be actuated (for example, by pressing a mouse button) to invoke a command associated with that element. Optical joysticks and trackpads may be used for cursor-based control. Touch-based control, typically associated with touchscreen displays 110, permits the user to more directly engage the graphical user interface elements displayed on the display 110 by touching or tapping the surface of the display 110 corresponding to that element. The touchscreen display 110 and its associated controller and processor 102 can be configured to also detect and identify gestures and multitouch input (directional input and multiple concurrent touch input, respectively).

In a browser or other runtime environment such as those described above, user input detected (a user event) at one or more of the user input mechanisms provided on the device 100 may be passed to the processor 102 for determination of the type of detected input. In the case of directional input received from a pointing device or another cursor-based control mechanism such as a trackpad or optical joystick, the processor 102 receives raw data concerning the user event, such as an indication of the application of external force or contact, magnitude, directional, location, timing, and/or speed information, and determines from the raw data what type of user event occurred, such as a cursor event, mouse event or a touch event, which can include both gestures (comprising a series of touch events) and multitouch input (comprising a series of touch events, some of which may be concurrent) as well as single-touch inputs. In the case of a touch event, the touchscreen display controller 216 may process the raw data representative of the user input. The result of the processing of the processor 102 and/or controller 216 is passed to the current application, i.e. the application corresponding to the active screen currently displayed at the device 100.

The taxonomy and models used to define user events and facilitate user input will be known to those skilled in the art. The foregoing embodiments thus provide systems and methods for provide contextual information within a display that facilitates data entry and yet minimizes processor activity.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments described herein.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits comprising custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rightsholder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method of generating a graphical user interface on a display of a computing device, the method comprising:
Categorizing stored data files into a number of categories;
In response to an input to the device, displaying at least two of the categories on the display, each displayed category being displayed within a respective discrete display area of the display and in each of the discrete display areas concurrently displaying graphical representations of data files for that category.

2. The method of claim 1 wherein the categories include a first category wherein the data files are organized in accordance with a first criterion and a second category wherein the data files are organized in accordance with a second criterion distinct from the first criterion, such that each of the first and second category comprise at least one data file.

3. The method of claim 1 or claim 2 wherein a first data file can be in both the first and second categories.

4. The method of claim 2 or claim 3 when dependent on claim 2, further comprising ranking individual data files in accordance with their relevance to specific criteria and within a first display area displaying graphical representations of high ranking data files in accordance with the first criterion, and within a discrete second display area displaying graphical representations of high ranking data files in accordance with the second criterion.

5. The method of any preceding claim comprising, subsequent to the concurrent display of categories and the display graphical representations of data files for that category and on receipt of a user input command, allowing a user directly select one of the plurality of individual data files.

6. The method of claim 5 wherein the direct selection provides a preferential display of the selected one of the plurality of individual data files.

7. The method of claims 5 wherein the graphical representation is a link to an executable file, the selection operably providing for an execution of the executable file.

8. The method of any preceding claim wherein the at least two discrete display areas are initially displayed having equal area.

9. The method of any preceding claim comprising, on determination that a particular category includes more data files than may be concurrently displayed within the area for that category, processing commands to change the displayed graphical representations of the plurality of individual ones of the stored data files for that category.

10. The method of claim 9 further comprising providing a graphical indication within the display area of the presence of additional individual ones of the stored data files so as to prompt a user command to change the display, the graphical indication optionally being co-located with the location within the display area of one of the already displayed graphical representations of one of the individual ones of the stored data files.

11. The method of claim 9 or 10 comprising one of:
replacing one or more of the displayed individual ones of the stored data files with other data files within the same category;
increasing the area occupied by that category in preference to the area occupied by a second category so as to display additional individual ones of the stored data files within the particular category;
expanding the area occupied by the selected category in preference to other categories while retaining at least a portion of other category within the display of the user interface.

12. The method of any preceding claim comprising categorizing a specific data file into two or more distinct categories.

13. The method of any preceding claim comprising one of:
providing the categorization in response to the input to the device;
triggering the categorization on a periodic basis such that on receipt of an input to the device, categories of the stored data are already available for display;
effecting the categorization during periods of recharging the device.

14. The method of any preceding claim comprising at least one of:
displaying categories including data files of the same type;
displaying categories including data files of different types.

15. The method of any preceding claim wherein the input to the device is a search query, the categorization being effected at least in part on an analysis of a user input search string.

16. A method of providing a user interface to one or more data files of an identified data file type, the method comprising the method of any preceding claim and further wherein the input to the device effects launch of an application executable within the computing device and dedicated to the display of the files of the identified file type, the display within individual display areas of the display being provided as an initial display screen of the application.

17. An electronic device adapted to execute the method of any preceding claim.

18. An electronic device-readable medium bearing code which, when executed by one or more processors comprised in an electronic device, causes the electronic device to carry out the method of any one of claims 1 to 16.

## Amended claims

### Amended claims in accordance with Rule 137(2) EPC.

**1.** A method of generating a graphical user interface on a display (110) of a computing device (100), the method comprising:
associating stored data files into a number of categories (600);
subsequently receiving an input to the device, and in response to the input displaying at least two of the categories on the display (110), each displayed category being displayed within a respective discrete display area of the display (110) and in each of the discrete display areas concurrently displaying graphical representations of data files associated with that category (605).

**2.** The method of claim 1 wherein the categories include a first category having at least one data file that meets a first criterion and a second category having at least one data file that meet a second criterion distinct from the first criterion, such that when each of the first and second category is displayed, a graphical representation of each of the at least one data file of the respective category is displayed.

**3.** The method of claim 1 or claim 2 wherein a first data file can be in both the first and second categories.

**4.** The method of claim 2 or claim 3 when dependent on claim 2, further comprising ranking individual data files in accordance with their relevance to specific criteria and within a first display area (400, 405) displaying graphical representations of high ranking data files in accordance with the first criterion, and within a discrete second display area (400, 405) displaying graphical representations (425) of high ranking data files in accordance with the second criterion.

**5.** The method of any preceding claim comprising, subsequent to the concurrent display of categories and the display of graphical representations (425) of data files for that category and on receipt of a user input command, enabling a direct user selection of one of the plurality of individual data files.

**6.** The method of claim 5, wherein a direct selection of one of the plurality of individual data files provides direct access to, or retrieval of, the data files associated with the graphical representations (425) through a single user interaction with the device (100).

**7.** The method of claims 5 wherein the graphical representation (425) is a link to an executable file, the selection operably providing for an execution of the executable file.

**8.** The method of any preceding claim wherein the at least two discrete display areas (400, 405) are initially displayed having equal area.

**9.** The method of any preceding claim comprising, on determination that a particular category includes more data files than may be concurrently displayed within the area for that category, processing commands to change the displayed graphical representations (425) of the plurality of individual ones of the stored data files for that category.

**10.** The method of claim 9 further comprising providing a graphical indication (425) within the display area of the presence of additional individual ones of the stored data files so as to prompt a user command to change the display.

**11.** The method of claim 9 or 10 comprising one of:
replacing one or more of the displayed individual ones of the stored data files with other data files within the same category;
increasing the area occupied by that category in preference to the area occupied by a second category so as to display additional individual ones of the stored data files within the particular category;
expanding the area occupied by the selected category in preference to other categories while retaining at least a portion of other category within the display of the user interface.

**12.** The method of any preceding claim comprising associating a specific data file into two or more distinct categories.

**13.** The method of any preceding claim comprising one of:
providing the associating in response to the input to the device (100);
wherein the associating is performed on a periodic basis;
wherein the associating is performed when the device (100) does not detect user interaction,
wherein the device (100) is rechargeable and the associating is performed during charging of the device (100).

**14.** The method of any preceding claim comprising at least one of:
displaying categories including data files of the same type;
displaying categories including data files of different types.

**15.** The method of any preceding claim wherein the method is peformed on a wireless communication device (100).

**16.** An electronic device (100) adapted to execute the method of any preceding claim.

**17.** An electronic device-readable medium bearing code which, when executed by one or more processors comprised in an electronic device (100), causes the electronic device to carry out the method of any one of claims 1 to 15.
